# EUROPÄISCHE PATENTSCHRIFT

(11) **EP 3 510 226 B1**
(45) Veröffentlichungstag und Bekanntmachung des Hinweises auf die Patenterteilung: **12.02.2020**
(21) Anmeldenummer: 17787173.8
(22) Anmeldetag: 19.10.2017
(51) Int. Cl.: E05F 15/619

(54) **GETRIEBEVORRICHTUNG ZUR ANBRINGUNG AN EINER ANTRIEBSWELLE**
TRANSMISSION DEVICE FOR ATTACHING TO A DRIVESHAFT
DISPOSITIF DE TRANSMISSION DESTINÉ À ÊTRE INSTALLÉ SUR UN ARBRE D'ENTRAÎNEMENT

(30) Priorität: 24.10.2016 DE 202016105970 U
(43) Veröffentlichungstag der Anmeldung: 17.07.2019
(73) Patentinhaber: Lock Antriebstechnik GmbH, 88521 Ertingen (DE)
(72) Erfinder: BAUSCH, Manfred, 88527 Unlingen (DE); BAUR, Marius, 88524 Oberwachingen (DE); VOGEL, Daniela, 72511 Bingen (DE)
(74) Vertreter: Otten, Roth, Dobler & Partner mbB Patentanwälte
(86) Internationale Anmeldenummer: PCT/EP2017/076777
(87) Internationale Veröffentlichungsnummer: WO 2018/077727

(56) Entgegenhaltungen:
- EP-A2- 0 994 281
- DE-U1- 29 714 265
- DE-U1-202016 101 760

## Beschreibung

### Stand der Technik

Getriebevorrichtungen zur Anbringung an einer Antriebswelle sind in vielfältiger Ausführungsform bereits bekannt.

Beispielsweise werden Zahnstangengetriebevorrichtungen eingesetzt, um in Gewächshäusern Glasflügel, die mit einem Ende der Zahnstange verbunden sind, in unterschiedliche Schwenkpositionen zu bewegen, insbesondere in eine geschlossene Position und eine vollständig geöffnete Position.

Häufig sind eine ganze Reihe von Zahnstangengetriebevorrichtungen, auf einer Antriebswelle angeordnet, um damit eine Vielzahl von Glasflügel betätigen zu können, die jeweils mit einem Ende einer jeweiligen Zahnstange des Zahnstangengetriebes in Verbindung stehen.

### Aufgaben und Vorteile der Erfindung

Der Erfindung liegt die Aufgabe zugrunde, eine Getriebevorrichtung, insbesondere eine Zahnstangengetriebevorrichtung, der einleitend bezeichneten Art in einer Weise auszugestalten, dass die Montage der Getriebevorrichtung verbessert bzw. vereinfacht ist.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Getriebevorrichtung zur Anbringung an einer Antriebswelle aus, mit einem Grundkörper, der die Antriebswelle zumindest teilweise umschließt, einem Ritzel, welches im montierten Zustand auf der Antriebswelle angeordnet ist, sowie einer Zahnstange, welche im montierten Zustand am Grundkörper mit dem Ritzel zusammenwirkt und durch den Grundkörper verläuft, wobei der Grundkörper einseitig derart offen ist, dass er sich auf eine Antriebswelle in radialer Richtung aufschieben lässt.

Erfindungsgemäß umfasst der Grundkörper zwei Schenkel, welche vorteilhafterweise einseitig derart offen sind, dass die Schenkel sich in radialer Richtung auf die Antriebswelle aufschieben lassen, wobei die Schenkel an sich gegenüberliegenden Seiten über Stege miteinander verbunden sind, sodass jeweils eine quer zu der Antriebswelle ausgerichtete Lasche entsteht, in welche sich die Zahnstange einlegen lässt.

Bevorzugterweise ist das Ritzel mehrteilig, insbesondere zweiteilig, ausgebildet. Beispielsweise besteht das Ritzel aus zwei Ritzelhälften. Hierdurch ist das Ritzel vergleichsweise einfach an eine bereits montierte Antriebswelle anordenbar.

Der Kern der Erfindung liegt darin, dass der Grundkörper ein Halteorgan umfasst, wobei das Halteorgan dazu ausgestaltet ist, das Ritzel im angeordneten Zustand am Grundkörper ohne weitere Bauteile in einer Position relativ zum Grundkörper festzulegen.

Hierdurch ist eine Montage der Getriebevorrichtung vereinfacht. Insbesondere ist dadurch das Ritzel derart am Grundkörper anordenbar, dass der Grundkörpers relativ zum Ritzel bzw. im angeordneten Zustand an der Antriebswelle relativ zur Antriebswelle positionierbar, insbesondere drehbar ist.

Ist das Ritzel zweiteilig ausgebildet, hält der Grundkörper beide Ritzelhälften im angeordneten Zustand vorteilhafterweise in axialer Richtung des Ritzels zusammen. Hierdurch ist verhindert, dass das Ritzel in axialer Richtung auseinanderfallen kann, wodurch das Ritzel in radialer Richtung am Grundkörper und/oder an der Antriebswelle gehalten ist.

Das Halteorgan ist vorteilhafterweise am Grundkörper hervorstehend, abstehend und/oder herausragend vorhanden. Denkbar ist auch, dass das Halteorgan vertieft, eingelassen, abgesetzt und/oder versenkt am Grundkörper vorhanden ist. Bevorzugterweise ist das Halteorgan ringartig und/oder ringscheibenartig ausgebildet. Vorteilhafterweise ist das Halteorgan an einem Schenkel des Grundkörpers vorhanden. Das Halteorgan ist beispielsweise einstückig mit dem Grundkörper vorhanden.

Zumindest ein Schenkel des Grundkörpers ist derart flexibel vorhanden, so dass sich der Schenkel auf den benachbarten zweiten Schenkel des Grundkörpers zu oder wegbewegen, z.B. biegen, lässt. Bevorzugterweise sind beide Schenkel des Grundkörpers flexible bzw. elastisch vorhanden. Der Schenkel ist oder die Schenkel sind vorteilhafterweise derart ausgebildet, so dass der Steg sich ausschließlich in einer Richtung flexibel verhält und in Richtung der beiden
verbleibenden Raumrichtungen vergleichsweise starr und/oder stabil vorhanden ist. Bevorzugterweise sind beide Schenkel parallel zu einer Rotationsachse des Ritzels im angeordneten Zustand am Grundkörper elastisch bewegbar vorhanden.

Des Weiteren ist das Halteorgan derart ausgebildet ist, dass das Ritzel an das Halteorgan aufrastbar ist. Hierdurch ist die Montage des Ritzels an den Grundkörper vergleichsweise vereinfacht und das Ritzels am Grundkörper in einer Position festgelegt.

Vorteilhafterweise ist das Ritzel an das Halteorgan einklickbar, z.B. einlegbar, einpassbar, einfügbar und/oder einbaubar. Denkbar ist ebenfalls, dass das Halteorgan umgekehrt an das Ritzel aufrastbar, z.B. einklickbar, einlegbar, einpassbar, einfügbar und/oder einbaubar ist.

Weiter wird vorgeschlagen, dass das Halteorgan hohlzylinderartig ausgebildet ist, wobei das Halteorgan entlang einer Zylinderachse eine Öffnung aufweist, wobei das Halteorgan einseitig derart offen ist, sodass die Antriebswelle sich in radialer Richtung einschieben, insbesondere einklippsen lässt.

Hierdurch ist eine Montage des Grundkörpers an die Antriebswelle, insbesondere an einer bereits montiert vorhandenen Antriebswelle vereinfacht.

Vorteilhafterweise umfasst das Halteorgan einen Zylindermantel, welcher die Öffnung aufweist. Der Zylindermantel ist beispielsweise geschlitzt ausgebildet. Das Halteorgan ist vorteilhafterweise zumindest annähernd zylindersymmetrisch vorhanden. Beispielsweise ist eine Zylindersymmetrie des Halteorgans ausschließlich durch die Öffnung unterbrochen.

Auch ist es von Vorteil, dass ein Innenradius des Halteorgans größer oder gleich groß ist, als ein Radius der Antriebswelle. Hierdurch kann das Halteorgan die Antriebswelle im angeordneten Zustand des Grundkörpers an der Antriebswelle umschließen bzw. umgreifen. Beispielsweise ist der Grundkörper mit dem Halteorgan auf die Antriebswelle aufsteckbar, insbesondere aufklickbar und/oder aufklemmbar. Die Antriebswelle ist im angeordneten Zustand am Grundkörper um eine Rotationsachse der Antriebswelle relativ zum Grundkörper bewegbar vorhanden.

Bevorzugterweise ist am Grundkörper ein Gleitlager für die Antriebswelle ausgebildet. Das Halteorgan kann das Gleitlager vorteilhafterweise zumindest teilweise umschließen. Z.B. ist im angeordneten Zustand des Grundkörpers an der Antriebswelle der Innenradius des Halteorgans dem Außenradius, beispielsweise dem Lagerradius der Antriebswelle gegenüberliegend vorhanden. Denkbar ist auch, dass zwischen dem Innenradius des Halteorgans und dem Außenradius der Antriebswelle im angeordneten Zustand eine Komponente des Ritzels vorhanden ist.

Als vorteilhaft erweist sich auch, dass das Halteorgan Lagermittel zur Lagerung der Antriebswelle aufweist.

Beispielsweise bildet eine innere Zylindermantelfläche des Halteorgans ein Lagermittel in Form einer Gleitlagerfläche für die Antriebswelle und/oder das Ritzel. Denkbar ist auch, dass eine äußere Zylindermantelfläche des Halteorgans ein Lagermittel in Form einer Gleitlagerfläche für das Ritzel bildet. Das Ritzel ist vorteilhafterweise an der festgelegten Position am Grundkörper drehbar vorhanden. Insbesondere ist das Ritzel derart am Grundkörper anordenbar, sodass es um seine Rotationsachse drehbar vorhanden ist.

Bei einer vorteilhaften Variante der Erfindung weist das Ritzel Aufnahmemittel auf, wobei die Aufnahmemittel ringförmig ausgebildet sind, wobei die Aufnahmemittel dazu ausgestaltet sind, ein Halteorgan, insbesondere zwei Halteorgane, des Grundkörpers aufzunehmen.
Beispielsweise ist das Halteorgan in die Aufnahmemittel des Ritzels einrastbar. Bevorzugterweise sind die Aufnahmemittel ringartig und/oder hohlzylinderartig am Ritzel vorhanden. Vorteilhafterweise sind die Aufnahmemittel am Ritzel vertieft vorhanden. Beispielsweise sind die Aufnahmemittel am Ritzel in einer axialen und/oder einer radialen Richtung des Ritzels vertieft ausgebildet.

Denkbar ist auch, dass die Aufnahmemittel am Ritzel abstehend vorhanden sind, beispielsweise in einer axialen Richtung des Ritzels abstehend. Vorstellbar ist, dass die Aufnahmemittel am Ritzel abstehend vorhanden sind und im angeordneten Zustand des Ritzels am Grundkörper in ein Halteorgan eingreifen, z.B. in ein Halteorgan eingerastet sind.

Überdies ist es von Vorteil, dass ein Radius, insbesondere ein Innenradius der Aufnahmemittel größer oder gleich groß vorhanden ist, wie ein Außenradius des Halteorgans. Die Aufnahmemittel können das Halteorgan oder zumindest Teile des Halteorgans im angeordneten Zustand am Grundkörper umschließen. Beispielsweise ist das Ritzel mit den Aufnahmemitteln an das Halteorgan geklipst.

Weiter wird vorgeschlagen, dass der Grundkörper zwei sich gegenüberliegende, insbesondere spiegelsymmetrisch angeordnete Halteorgane aufweist. Die zwei Halteorgane sind sich gegenüberliegend am Grundkörper vorhanden. Ein Halterorgan ist jeweils an einem Schenkel des Grundkörpers ausgebildet. Das Ritzel ist z.B. zwischen die zwei Halteorgane einrastbar positionierbar. Das Ritzel ist zwischen den beiden Schenkeln des Grundkörpers positionierbar, insbesondere durch zumindest ein Halteorgan am Grundkörper zwischen den beiden Schenkeln des Grundkörpers festgelegt.

In einer vorteilhaften Ausgestaltung der Getriebevorrichtung umfasst das Halteorgan Lagermittel zur Lagerung des Ritzels, insbesondere zur Lagerung der Aufnahmemittel des Ritzels. Die Lagermittel des Halteorgans sind beispielsweise als eine Gleitlagerfläche vorhanden.

Auch ist es von Vorteil, dass das Ritzel Aufnahmemittel umfasst, welche spiegelsymmetrisch am Ritzel vorhanden sind. Beispielsweise sind die Aufnahmemittel in axialer Richtung des Ritzels gesehen sich gegenüberliegend z.B. abstehend oder z.B. vertieft am Ritzel vorhanden.

Denkbar ist auch, dass das Ritzel Aufnahmemittel, z.B. in Form eines Ritzelkranz, aufweist, welche derart elastisch vorhanden sind, dass das Ritzel mit den Aufnahmemitteln auf ein Halteorgan des Grundkörpers aufrastbar ist.

Überdies erweist es sich als vorteilhaft, dass der Grundkörper einen Lagerabschnitt zur insbesondere beweglichen Lagerung der Antriebswelle umfasst.

In einer vorteilhaften Ausführung der Erfindung weist die offene Seite des Grundkörpers unterhalb eines Bereichs, in welchem sich eine Rotationsachse der Antriebswelle im angeordneten Zustand befindet, eine lichte Weite auf, welche kleiner ist, als ein Durchmesser einer zylinderförmigen Gleitlagerfläche des Grundkörpers, an welcher das Ritzel und/oder die Antriebswelle im angeordneten Zustand am Grundkörper gelagert ist.

### Beschreibung des Ausführungsbeispiels

Ein Ausführungsbeispiel wird anhand der nachstehenden schematischen Zeichnungen unter Angabe weitere Einzelheiten und Vorteile näher erläutert.

Es zeigen:
- Figur 1: eine seitliche Ansicht von vorne auf einen Grundkörper einer erfindungsgemäßen Getriebevorrichtung,
- Figur 2: eine Schnittansicht des Grundkörpers aus Figur 1,
- Figuren 3 und 4: ein Ritzel in einer perspektivischen Ansicht in einer einteiligen und in einer zweiteiligen Form,
- Figur 5: eine perspektivische Ansicht von seitlich vorne oben auf den Grundkörper nach Figur 1 mit angeordnetem Ritzel und
- Figur 6: eine perspektivisch Ansicht von seitlich vorne oben auf die Getriebevorrichtung mit einem Grundkörper nach Figur 1 und einem Ritzel nach Figur 3 mit angeordneter Zahnstange und Antriebswelle.

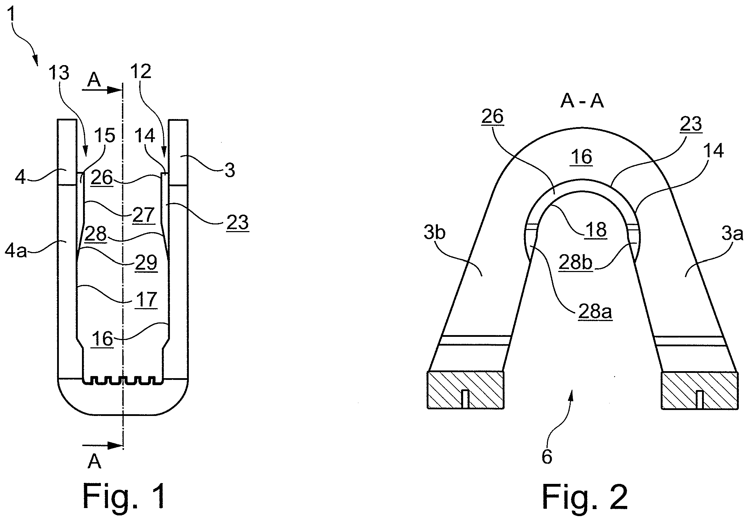

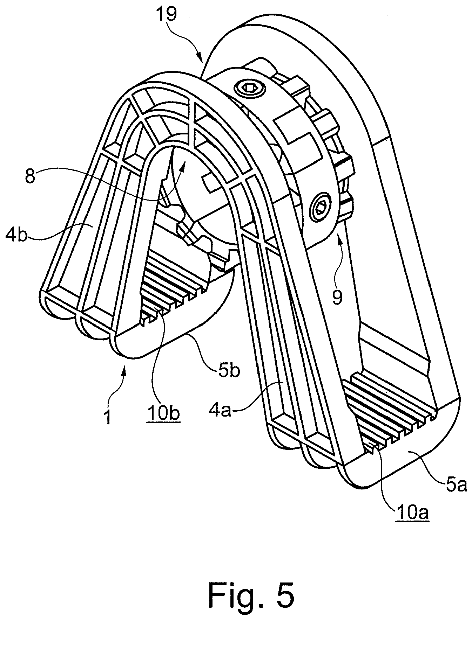

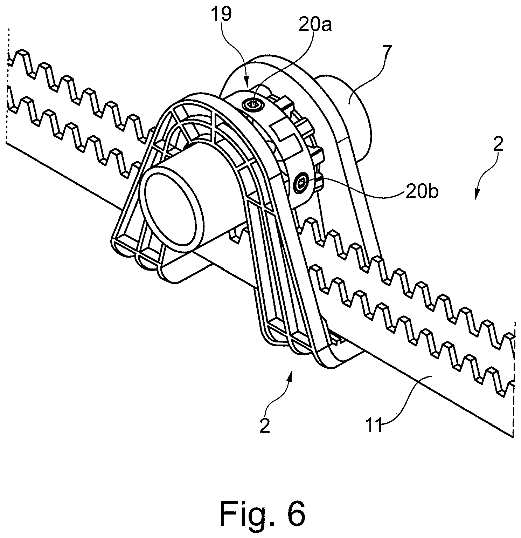

In Figur 1 ist ein Grundkörper 1 einer Getriebevorrichtung 2 (s. auch Figuren 5, 6) dargestellt. Der Grundkörper 1 umfasst zwei Schenkel 3, 4 die jeweils gegenüberliegende Schenkelabschnitte 3a und 3b beziehungsweise Schenkelabschnitte 4a und 4b aufweisen.

Jeweils zwei Schenkelabschnitte 3a, 4a beziehungsweise Schenkelabschnitte 3b, 4b sind über einen Verbindungssteg 5a, 5b miteinander verbunden. Auf diese Weise bilden die Schenkelabschnitte 3a, 4a mit dem Verbindungssteg 5a, sowie die Schenkelabschnitte 3b, 4b mit dem Verbindungssteg 5b jeweils eine U-förmige Schlaufe des Grundkörpers 1. Die Verbindungsstege 5a, 5b umfassen insbesondere Gleitlagerflächen 10a, 10b zur Lagerung einer Zahnstange 11 der Getriebevorrichtung 2. Die Gleitlagerflächen 10a, 10b zur Lagerung der Zahnstange 11 sind vorteilhafterweise einstückig mit dem Grundkörper 1 der Getriebevorrichtung 2 vorhanden.

Die Schenkel 3, 4 sind bogenartig vorhanden und umfassen eine Öffnung 6, in welche eine Antriebswelle 7 einführbar ist, indem der Grundkörper 1 z.B. über die Antriebswelle 7 radial gestülpt wird, bis die Antriebswelle 7 in Lageraussparungen 8, 9 des Grundkörpers 1 und einer dort z.B. ausgebildeten Gleitlagerfläche insbesondere satt anliegt (Figur 5).

An einer Innenseite 12, 13 der Schenkel 3, 4 im Bereich der Lageraussparungen 8, 9 sind am Grundkörper 1 z.B. ringartige Halteorgane 14, 15 an Innenflächen 16, 17 der Schenkel 3, 4 beispielsweise abstehend vorhanden.

Vorteilhafterweise ist eine innere Ringfläche des Halteorgans 14 als Gleitlagerfläche 18 ausgebildet, an welcher die Antriebswelle 7 im angeordneten Zustand insbesondere satt anliegt (Figur 2). Gleiches kann auch am Halteorgan 13 vorhanden sein (nicht gezeigt). Bevorzugterweise ist an einer äußeren Ringfläche eine weitere Gleitlagerfläche 23 vorhanden, durch welche ein, an den Grundkörper 1 montiertes Ritzel 19, 22 z.B. bewegbar am Grundkörper 1 gelagert ist. Die Öffnung 6 des der Schenkel 3, 4 bildet bevorzugterweise gleichzeitig auch eine Öffnung der Halteorgane 13, 14.

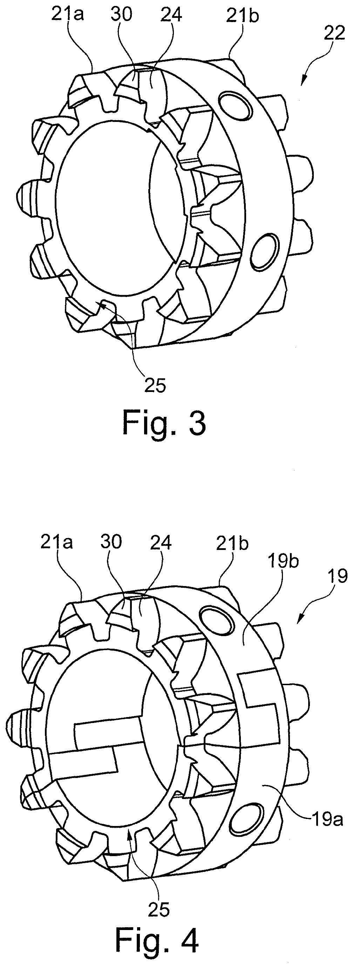

Die Figuren 3 und 4 zeigen ein einteiliges Ritzel 22 und ein mehrteiliges Ritzel 19. Das mehrteilige Ritzel 19 besteht z.B. aus zwei Ritzelhälften 19a, 19b. Die Ritzelhälften 19a, 19b werden z.B. aneinander gesteckt oder beispielsweise miteinander verschraubt. In einer vorteilhaften Variante eines Ritzels 19 umfassen die Ritzelhälften 19a, 19b an ihren Enden eine Verzahnungsstruktur mittels welcher sie aneinander steckbar sind und damit z.B. verklemmt werden können. Die Ritzel 19, 22 werden zum Beispiel über Fixierschrauben 20a, 20b auf der Antriebswelle 1 gegen eine Verdrehung gesichert (Figur 6).

Das Ritzel 19, 22 umfasst radial außenliegend einen Ritzelkranz, welcher z.B. in radialer Richtung betrachtet zweigeteilt vorhanden ist und zwei Ritzelkranzhälften 21a, 21b umfasst. Die erste Ritzelkranzhälfte 21a kann somit an einer ersten axialen Außenfläche des Ritzels 19, 22 ausgebildet sein und eine zweite Ritzelkranzhälfte 21b an einer der ersten axialen Außenfläche gegenüberliegenden zweiten axialen Außenfläche des Ritzels 19, 22 vorhanden sein. Die beiden Ritzelkranzhälften 21a, 21b sind beispielsweise spiegelsymmetrisch am Ritzel 19, 22 vorhanden. Denkbar ist auch, dass die Ritzelkranzhälte 21a, 21b von einer radialen Außenfläche des Ritzels 19, 22 abstehend vorhanden ist.

Ein Ritzelzahn 24 des Ritzelkranzes, insbesondere der Ritzelkranzhälften 21a, 21b ist vorteilhafterweise hakenartig, z.B. L-förmig vorhanden. Vorteilhafterweise steht der Ritzelzahn 24 in axialer Richtung vom Ritzel 19, 22 ab. Mehrere Ritzelzähne 24 sind z.B. auf einem Radius des Ritzels 19, 22 gleichmäßig verteilt angeordnet. Die in axialer Richtung abstehenden hakenförmigen Ritzelzähne 24 bilden dadurch einen insbesondere ringförmigen oder scheibenartigen Aufnahmebereich 25 zur Aufnahme des Halteorgans 14, 15 im angeordneten Zustand an der Getriebevorrichtung 2. Hierdurch umgreift, bzw. umschließt ein Ritzelzahn 24 im montierten Zustand an der Getriebevorrichtung 2 das Halteorgan 14, 15. Das Halteorgan 14, 15 ist beispielsweise im montierten Zustand der Getriebevorrichtung 2 im Aufnahmebereich 25 des Ritzels 19, 22 vorhanden. Vorteilhafterweise ist der Ritzelkranz, insbesondere der Ritzelzahn 24 starr und unelastisch vorhanden.

Figur 6 zeigt den vollständig montierten Zustand des Zahnstangengetriebes 2 mit Zahnstange 11, die mit dem Ritzel 19 kämmt. Durch die eingeschobene, montierte Zahnstange 11 kann insbesondere der Grundkörper 2 nicht mehr von der Antriebswelle 7 in radialer Richtung abgehoben werden.

Ein Ritzel 19, 22 kann in radialer Richtung an den Grundkörper 1 geklemmt werden. Vorteilhafterweise wird hierzu zunächst das Ritzel 19, 22 an der Antriebswelle 7 montiert und anschließend der Grundkörper 1 mit der Öffnung 6 in radialer Richtung an das Ritzel 19, 22 und an die Antriebswelle 7 angesteckt bzw aufgeschoben. Hierzu werden die Schenkel 3, 4 des Grundkörpers 1 vorteilhafterweise vergleichsweise gering voneinander weggebogen, sodass die Ritzelkranzhälften 21a, 21b und somit der Ritzelzahn 24 an einer Innenfläche 26, 27 der Halteorgane 13, 14 vorbei über die Halteorgane 13, 14 aufgeschoben werden können.

Zur vereinfachten Montage des Grundkörpers 1 und des Ritzels 19, 22 umfassen die Halteorgane 13, 14 hierzu z.B. eine abgeschrägte Fläche 28a, 28b, 29a, 29b, welche ausgehend von der Innenfläche 26, 27 des Halteorgans 13, 14 in Richtung der Innenflächen 16, 17 der Schenkel 3, 4 verläuft (Figur 1). Weiter umfasst ein Ritzelzahn 24 z.B. radial außenliegend eine Abschrägung 30, welche in radialer Richtung von einer Ritzelaußenseite in Richtung Rotationsachse des Ritzels 19, 22 in axialer Richtung vom Ritzel weg verläuft. Hierdurch wird beim Aufschieben des Ritzels 19, 22 auf den Grundkörper 1 eine Biegung der Schenkel 3, 4 unterstützt und die Montage vereinfacht. Vorteilhafterweise werden die Schenkel 3, 4 vergleichsweise einfach allein durch das Aufschieben des Grundkörpers 1 auf das Ritzel 19, 22 auseinandergebogen.

Denkbar ist auch, dass das Ritzel 19, 22 derart an den Grundkörper 1 angeklipst bzw. angeklemmt wird, in dem das Ritzel 19, 22 zunächst an der Antriebswelle 7 montiert und anschließend der Grundkörper 1 mit der Öffnung 6 in radialer Richtung an das Ritzel 19, 22 und an die Antriebswelle 7 aufgeschoben wird, wobei beim Aufschieben die Halteorgane 14, 15 im Bereich der abgeschrägten Flächen 28a, 28b bzw. 29a, 29b senkrecht zur Aufschieberichtung und senkrecht zur Rotationsachse der Antriebswelle 7 insbesondere elastisch ausweichen, sodass das Ritzel 19, 22 am Grundkörper 1 gehalten ist.

### Bezugszeichenliste

- 1: Grundkörper
- 2: Getriebevorrichtung
- 3 - 4: Schenkel
- 3a, 3b: Schenkelabschnitt
- 4a, 4b: Schenkelabschnitt
- 5a, 5b: Verbindungssteg
- 6: Öffnung
- 7: Antriebswelle
- 8, 9: Lageraussparung
- 10a, 10b: Gleitlagerfläche
- 11: Zahnstange
- 12, 13: Innenseite
- 14, 15: Halteorgan
- 16, 17: Innenfläche
- 18: Gleitlagerfläche
- 19, 22: Ritzel
- 19a, 19b: Ritzelhälfte
- 20a, 20b: Fixierschraube
- 21a, 21b: Ritzelkranzhälfte
- 23: Gleitlagerfläche
- 24: Ritzelzahn
- 25: Aufnahmebereich
- 26, 27: Innenfläche
- 28a, 28b: Fläche
- 29a, 29b: Fläche
- 30: Abschrägung

## Patentansprüche

1. Getriebevorrichtung (2) zur Anbringung an einer Antriebswelle (7), mit einem Grundkörper (1), der die Antriebswelle (7) zumindest teilweise umschließt, einem Ritzel (19, 22), welches im montierten Zustand auf der Antriebswelle (7) angeordnet ist, sowie einer Zahnstange (11), welche im montierten Zustand am Grundkörper (1) mit dem Ritzel (19, 22) zusammenwirkt und durch den Grundkörper (1) verläuft, wobei der Grundkörper (1) zwei Schenkel (3, 4) umfasst, welche einseitig derart offen sind, dass der Grundkörper (1) sich auf die Antriebswelle (7) in radialer Richtung in Bezug zur Antriebswelle (7) aufschieben lässt, wobei die Schenkel (3, 4) an sich gegenüberliegenden Seiten über Stege (5a, 5b) miteinander verbunden sind, sodass jeweils eine quer zu der Antriebswelle (7) ausgerichtete Lasche entsteht, in welche sich die Zahnstange (11) einlegen lässt, **dadurch gekennzeichnet, dass** zwei Halteorgane (14, 15) sich gegenüberliegend am Grundkörper (1) vorhanden sind, und jeweils ein Halteorgan (14, 15) an einem Schenkel (3, 4) des Grundkörpers (1) vorhanden ist, und die Halteorgane (14, 15) derart ausgebildet sind, dass das Ritzel (19, 22) an die Halteorgane (14, 15) aufgerastet wird, und dass hierzu die Schenkel (3, 4) des Grundkörpers (1) voneinander weggebogen sind, sodass das Ritzel (19, 22) an einer Innenfläche (26, 27) der Halterorgane (14, 15) aufgeschoben ist, und dass das Ritzel (19, 22) durch die Halteorgane (14, 15) am Grundkörper (1) zwischen den beiden Schenkeln (3, 4) des Grundkörpers (1) im angeordneten Zustand am Grundkörper (1) festgelegt ist.

2. Getriebevorrichtung (2) nach einem der vorangegangenen Ansprüche, **dadurch gekennzeichnet, dass** das Halteorgan (14, 15) hohlzylinderförmig ausgebildet ist, wobei das Halteorgan (14, 15) entlang einer Zylinderachse eine Öffnung (6) aufweist, sodass das Halteorgan (14, 15) einseitig derart offen ist, sodass die Antriebswelle (7) sich in radialer Richtung einschieben lässt.

3. Getriebevorrichtung (2) nach einem der vorangegangenen Ansprüche, **dadurch gekennzeichnet, dass** ein Innenradius des Halteorgans (14, 15) größer oder gleich groß ist, als ein Radius der Antriebswelle (7).

4. Getriebevorrichtung (2) nach einem der vorangegangenen Ansprüche, **dadurch gekennzeichnet, dass** das Halteorgan (14, 15) Lagermittel (18) zur Lagerung der Antriebswelle (7) aufweist.

5. Getriebevorrichtung (2) nach einem der vorangegangenen Ansprüche, **dadurch gekennzeichnet, dass** das Ritzel (19, 22) Aufnahmemittel (24) aufweist, wobei die Aufnahmemittel (24) ringförmig ausgebildet sind, wobei die Aufnahmemittel (24) dazu ausgestaltet sind, ein Halteorgan (14, 15), insbesondere zwei Halteorgane (14, 15), des Grundkörpers (1) aufzunehmen.

6. Getriebevorrichtung (2) nach einem der vorangegangenen Ansprüche, **dadurch gekennzeichnet, dass** ein Radius, insbesondere ein Innenradius der Aufnahmemittel (24), größer oder gleich groß vorhanden ist, als ein Außenradius des Halteorgans (13, 14).

7. Getriebevorrichtung (2) nach einem der vorangegangenen Ansprüche, **dadurch gekennzeichnet, dass** der Grundkörper (1) zwei sich gegenüberliegende spiegelsymmetrisch angeordnete Halteorgane (14, 15) aufweist.

8. Getriebevorrichtung (2) nach einem der vorangegangenen Ansprüche, **dadurch gekennzeichnet, dass** das Halteorgan (14, 15) Lagermittel (23) zur Lagerung des Ritzels (19, 22), insbesondere der Aufnahmemittel (24) umfasst.

9. Getriebevorrichtung (2) nach einem der vorangegangenen Ansprüche, **dadurch gekennzeichnet, dass** das Ritzel (19, 22) Aufnahmemittel (21a, 21b) umfasst, welche spiegelsymmetrisch am Ritzel (19, 22) vorhanden sind.

10. Getriebevorrichtung (2) nach einem der vorangegangenen Ansprüche, **dadurch gekennzeichnet, dass** der Grundkörper (1) einen Lagerabschnitt (18) zur Lagerung der Antriebswelle (7) aufweist.

11. Getriebevorrichtung (2) nach einem der vorangegangenen Ansprüche, **dadurch gekennzeichnet, dass** die offene Seite des Grundkörpers (1) unterhalb eines Bereichs, in welchem sich eine Rotationsachse der Antriebswelle (7) im angeordneten Zustand befindet, eine lichte Weite aufweist, welche kleiner ist, als ein Durchmesser einer zylinderförmigen Gleitlagerfläche (18) des Grundkörpers (1), an welcher das Ritzel (19, 22) und/oder die Antriebswelle (7) im angeordneten Zustand am Grundkörper (1) gelagert ist.

## Claims

1. Gear device (2) for attaching onto a drive shaft (7), having a main body (1) which at least partly surrounds the drive shaft (7), a pinion (19, 22) which is arranged in the assembled state on the drive shaft (7), and a rack (11) which in the assembled state on the main body (1) cooperates with the pinion (19, 22) and extends through the main body (1), wherein the main body (1) comprises two legs (3, 4) which are open on one side in such a manner that the main body (1) can be fitted onto the drive shaft (7) in radial direction relative to the drive shaft (7), wherein the legs (3, 4) are joined together on opposite sides by means of crosspieces (5a, 5b), so that a tab is formed respectively aligned to be perpendicular to the drive shaft (7) into which the rack (11) can be placed, **characterised in that** two retaining elements (14, 15) are provided opposite one another on the main body (1) and a retaining element (14, 15) is provided on a leg (3, 4) of the main body (1) respectively and the retaining elements (14, 15) are designed such that the pinion (19, 22) is mounted on the retaining elements (14, 15) and **in that** the legs (3, 4) of the main body (1) are bent away from one another so that the pinion (19, 22) is pushed on an inner face (26, 27) of the retaining elements (14, 15) and **in that** the pinion (19, 22) is secured by the retaining elements (14, 15) on the main body (1) between the two legs (3, 4) of the main body (1) when arranged on the main body (1).

2. Gear device (2) according any of the preceding claims, **characterised in that** the retaining element (14, 15) is designed to be hollow-cylindrical, wherein the retaining element (14, 15) has an opening (6) along a cylinder axis, so that the retaining element (14, 15) is open one one side in such a manner that the drive shaft (7) can be inserted in radial direction.

3. Gear device (2) according to any of the preceding claims, **characterised in that** an internal radius of the retaining element (14, 15) is greater than or equal in size to a radius of the drive shaft (7).

4. Gear device (2) according to any of the preceding claims, **characterised in that** the retaining element (14, 15) has a bearing (18) for supporting the drive shaft (7).

5. Gear device (2) according to any of the preceding claims, **characterised in that** the pinion (19, 22) has receiving elements (24), wherein the receiving elements (24) are designed to be annular, wherein the receiving elements (24) are configured to receive a retaining element (14, 15), in particular two retaining elements (14, 15) of the main body (1).

6. Gear device (2) according to any of the preceding claims, **characterised in that** a radius, in particular an internal radius of the receiving elements (24), is greater than or equal in size to an external radius of the retaining element (13, 14).

7. Gear device (2) according to any of the preceding claims, **characterised in that** the main body (1) has two opposite retaining elements (14, 15) arranged to be mirror symmetrical.

8. Gear device (2) according to any of the preceding claims, **characterised in that** the retaining element (14, 15) comprises a bearing (23) for supporting the pinion (19, 22), in particular the receiving elements (24).

9. Gear device (2) according to any of the preceding claims, **characterised in that** the pinion (19, 22) comprises receiving elements (21a, 21b) which are provided in a mirror-symmetrical form on the pinion (19, 22).

10. Gear device (2) according to any of the preceding claims, **characterised in that** the main body (1) has a bearing portion (18) for supporting the drive shaft (7).

11. Gear device (2) according to any of the preceding claims, **characterised in that** the open side of the main body (1), below a region where a rotational axis of the drive shaft is situated in an assembled state, has a clearance, which is smaller than a diameter of a cylindrical plain bearing face (18) of the main body (1) on which the pinion (19, 22) and/or the drive shaft (7) is supported when assembled on the main body (1).

## Revendications

1. Dispositif de transmission (2) destiné à être monté sur un arbre d'entraînement (7), comprenant un corps de base (1) qui entoure au moins partiellement l'arbre d'entraînement (7), un pignon (19, 22) qui à l'état monté est disposé sur l'arbre d'entraînement (7), ainsi qu'une crémaillère (11) qui à l'état monté coopère avec le pignon (19, 22) du corps de base (1) et s'étend à travers le corps de base (1), le corps de base (1) se composant de deux branches (3, 4) qui sont ouvertes d'un côté de telle sorte que le corps de base (1) peut être poussé sur l'arbre d'entraînement (7) dans la direction radiale par rapport à l'arbre d'entraînement (7), les branches (3, 4) étant reliées entre elles sur des côtés en vis-à-vis par des entretoises (5a, 5b) de sorte qu'il se forme pour chacune une éclisse orientée transversalement à l'arbre d'entraînement (7) et dans laquelle peut être insérée la crémaillère (11), **caractérisé en ce que** deux organes de retenue (14, 15) se faisant face sont prévus sur le corps de base (1), et un organe de retenue (14, 15) est présent sur chaque branche (3, 4) du corps de base (1), et les organes de retenue (14, 15) sont conçus de telle sorte que le pignon (19, 22) est encliqueté sur les organes de retenue (14, 15), et **en ce que** pour cela les branches (3, 4) du corps de base (1) sont écartées l'une de l'autre de sorte que le pignon (19, 22) est poussé sur une surface intérieure (26, 27) des organes de retenue (14, 15), et **en ce que** le pignon (19, 22), à l'état monté sur le corps de base (1), est fixé au corps de base (1) par les organes de retenue (14, 15) entre les deux branches (3, 4) du corps de base (1).

2. Dispositif de transmission (2) selon l'une des revendications précédentes, **caractérisé en ce que** l'organe de retenue (14, 15) est de forme cylindrique creuse, l'organe de retenue (14, 15) présentant une ouverture (6) le long d'un axe cylindrique de sorte que l'organe de retenue (14, 15) est ouvert d'un côté de telle sorte que l'arbre d'entraînement (7) peut être inséré dans la direction radiale.

3. Dispositif de transmission (2) selon l'une des revendications précédentes, **caractérisé en ce qu'**un rayon intérieur de l'organe de retenue (14, 15) est supérieur ou égal à un rayon de l'arbre d'entraînement (7).

4. Dispositif de transmission (2) selon l'une des revendications précédentes, **caractérisé en ce que** l'organe de retenue (14, 15) est muni de moyens de palier (18) pour loger l'arbre d'entraînement (7).

5. Dispositif de transmission (2) selon l'une des revendications précédentes, **caractérisé en ce que** le pignon (19, 22) est muni de moyens de réception (24), lesquels moyens de réception (24) sont conçus en forme annulaire, lesdits moyens de réception (24) étant conçus pour recevoir un organe de retenue (14, 15) du corps de base (1), en particulier deux organes de retenue (14, 15).

6. Dispositif d'engrenage (2) selon l'une des revendications précédentes, **caractérisé en ce qu'**un rayon, en particulier un rayon intérieur des moyens de réception (24), est supérieur ou égal à un rayon extérieur de l'organe de retenue (13, 14).

7. Dispositif de transmission (2) selon l'une des revendications précédentes, **caractérisé en ce que** le corps de base (1) est muni de deux organes de retenue (14, 15) qui sont disposés se faisant face selon une symétrie de miroir.

8. Dispositif de transmission (2) selon l'une des revendications précédentes, **caractérisé en ce que** l'organe de retenue (14, 15) est muni de moyens de palier (23) pour loger le pignon (19, 22), en particulier les moyens de réception (24).

9. Dispositif de transmission (2) selon l'une des revendications précédentes, **caractérisé en ce que** le pignon (19, 22) comprend des moyens de réception (21a, 21b) qui sont présents sur le pignon (19, 22) selon une symétrie de miroir.

10. Dispositif de transmission (2) selon l'une des revendications précédentes, **caractérisé en ce que** le corps de base (1) est muni d'une section de palier (18) pour loger l'arbre d'entraînement (7).

11. Dispositif de transmission (2) selon l'une des revendications précédentes, **caractérisé en ce que** le côté ouvert du corps de base (1), en dessous d'une zone dans laquelle se trouve un axe de rotation de l'arbre d'entraînement (7) à l'état monté, présente une largeur libre inférieure au diamètre d'une surface de palier lisse cylindrique (18) du corps de base (1) sur laquelle est logé le pignon (19, 22) et/ou l'arbre d'entraînement (7) à l'état monté sur le corps de base (1).
